# EUROPÄISCHE PATENTANMELDUNG

(11) **EP 3 708 547 A1**
(43) Veröffentlichungstag der Anmeldung: **16.09.2020**
(21) Anmeldenummer: 19162613.4
(22) Anmeldetag: 13.03.2019
(51) Int. Cl.: C03B 19/06, C03C 3/06

(54) **BAUTEIL AUS DOTIERTEM QUARZGLAS FÜR DEN EINSATZ IN EINEM PLASMA-UNTERSTÜTZTEN FERTIGUNGSPROZESS SOWIE VERFAHREN ZUR HERSTELLUNG DES BAUTEILS**

(71) Anmelder: Heraeus Quarzglas GmbH & Co. KG, 63450 Hanau (DE)
(72) Erfinder: STAMMINGER, Mark, 63450 Hanau (DE); SUCH, Mario, 63450 Hanau (DE)
(74) Vertreter: Staudt, Armin Walter

(57) **Zusammenfassung**

Bekannte Bauteil aus dotiertem Quarzglas für den Einsatz in einem plasma-unterstützten Fertigungsprozess; insbesondere bei der Halbleiterfertigung, enthalten mindestens einen Dotierstoff, der geeignet ist, mit Fluor unter Bildung einer Fluorid-Verbindung zu reagieren, wobei die Fluorid-Verbindung einen Siedepunkt hat, der höher ist als derjenige von SiF₄. Um hiervon ausgehend ein Bauteil aus dotiertem Quarzglas anzugeben, das sich bei Einsatz in einem plasma-unterstützten Fertigungsprozess durch hohe Trockenätzbeständigkeit und geringe Partikelbildung und insbesondere durch einen gleichmäßigen Ätzabtrag auszeichnet, wird vorgeschlagen, dass das dotierte Quarzglas eine Mikrohomogenität aufweist, die definiert ist (a) durch eine Oberflächenrauigkeit mit einem Rₐ-Wert von weniger als 20 nm, nachdem die Oberfläche einer in der Beschreibung spezifizierten Trockenätzprozedur unterzogen worden ist, und/oder (b) durch eine Dotierstoff-Verteilung mit einem lateralen Konzentrationsprofil, bei dem Maxima der Dotierstoff-Konzentration einen mittleren Abstand von weniger als 30 µm voneinander haben.

## Beschreibung

### Technisches Gebiet

Die Erfindung betrifft ein Bauteil aus dotiertem Quarzglas für den Einsatz in einem plasmaunterstützten Fertigungsprozess; insbesondere bei der Halbleiterfertigung, das mindestens einen Dotierstoff enthält, der geeignet ist, mit Fluor unter Bildung einer Fluorid-Verbindung zu reagieren, wobei die Fluorid-Verbindung einen Siedepunkt hat, der höher ist als derjenige von SiF₄.

Außerdem betrifft die Erfindung ein Verfahren zur Herstellung eines Bauteils aus dotiertem Quarzglas für den Einsatz in einem plasmaunterstützten Fertigungsprozess, umfassend die folgenden Verfahrensschritte:
(a) Bereitstellen eines Schlickers, der SiO₂-Teilchen in einer wässrigen Flüssigkeit enthält,
(b) Bereitstellen einer Dotierlösung, die ein Lösungsmittel und mindestens einen Dotierstoff oder eine Ausgangssubstanz für den mindestens einen Dotierstoff in gelöster Form enthält,
(c) Zusammenführen von Dotierlösung und Schlicker zu einer Dispersion, in der Teilchen ausgefällt werden, die den Dotierstoff oder eine Dotierstoff-Vorläufersubstanz enthalten,
(d) Trocknen der Dispersion unter Bildung von Granulatteilchen, die SiO₂ und den Dotierstoff oder die Dotierstoff-Vorläufersubstanz enthalten, und
(e) Sintern oder Schmelzen der Granulatteilchen unter Bildung des Bauteils aus dotiertem Quarzglas.

Plasmaunterstütztes Trockenätzen - auch kurz als "Plasmaätzen" bezeichnet - ist eine unverzichtbare Technologie zum Herstellen ultrafeiner Strukturen von Halbleiterbauelementen, hochauflösender Displays und in der Solarzellenfertigung.

Das Plasmaätzen wird in einem Vakuumreaktor bei einer relativ hohen Temperatur und in einer hoch korrosiven Atmosphäre ausgeführt. In der Regel wird der Vakuumreaktor bei geringem Druck von einem Ätzgas gespült. Durch eine Hochfrequenzentladung zwischen Elektroden oder durch eine elektrodenlose Mikrowellenentladung wird ein hochreaktives, ätzaktives Plasma erzeugt.

Zum Ätzen von Strukturen, die auf Silizium basieren, werden beispielsweise halogenhaltige Ätzgase eingesetzt, insbesondere perfluorierte Kohlenwasserstoffe wie beispielsweise CF₄, CHF₃, C₂F₆, C₃F₈, NF₃ oder SF₆. Elementares Fluor, Fluor-Ionen und -Radikale zeigen nicht nur die gewünschte Ätzwirkung, sondern reagieren auch mit anderen Komponenten, die dem Plasma ausgesetzt sind. Der dadurch verursachte korrosive Verschleiß kann zur Generierung von Partikeln und zu einer starken Veränderung der Komponente führen, die ihren Austausch erfordert. Dies betrifft insbesondere die Reaktorwandung und Wandungen von Reaktoreinbauten in der Nähe des zu bearbeitenden Objektes (dieses wird im Folgenden der Einfachheit halber auch kurz als "Wafer" bezeichnet), wie Waferhalter, Heizeinrichtungen, Pedestal und Stütz- oder Spannelemente.

### Stand der Technik

Aufgrund seiner hohen chemischen Beständigkeit gegenüber vielen im Fertigungsprozess eingesetzten Substanzen und seiner relativ hohen Temperaturfestigkeit wird für besonders beanspruchte Komponenten häufig Quarzglas eingesetzt. Bei fluorhaltigem Ätzgas unterliegt das SiO₂ des Quarzglases jedoch einer Reaktion mit reaktivem Fluor unter Bildung von SiF₄. Der Siedepunkt von SiF₄ liegt bei -86 °C, so dass diese Verbindung leicht in die Gasphase übergeht, was mit einer starken Korrosion an der Oberfläche des Quarzglases einhergeht
Es ist bekannt, dass eine Verbesserung der Trockenätzbeständigkeit von Quarzglas durch Dotierung mit anderen Substanzen erreicht werden kann. So beschreibt beispielsweise die US 6,887,576 B2, dass eine hohe Trockenätzbeständigkeit von Quarzglas durch Dotierung mit metallischen Elementen erreichbar ist, wenn das metallische Element geeignet ist, mit Fluor unter Bildung einer Fluorid-Verbindung zu reagieren, die einen Siedepunkt hat, der höher ist als der von SiF₄. Als Beispiele für derartige metallische Elemente werden genannt: Al, Sm, Eu, Yb, Pm, Pr, Nd, Ce, Tb, Gd, Ba, Mg, Y, Tm, Dy, Ho, Er, Cd, Co, Cr, Cs, Zr, In, Cu, Fe, Bi, Ga, und Ti.

Zur Herstellung des plasmaätzresistenten Quarzglases wird eine Vielzahl von Methoden genannt. Bei einer davon wird ein wässriger Schlicker aus 750 g Quarzpulver aus Partikeln mit Partikeldurchmessern von 100 bis 500 µm und 200 g SiO₂-Pulver aus pyrolytisch erzeugter Siliziumdioxid und 700 g Aluminiumnitrat erzeugt. Der Schlicker wird langsam unter Bildung eines Feststoffes getrocknet und anschließend einer Wärmebehandlung bei 1800 °C unter Vakuum unterzogen. Dadurch wird transparentes, mit 2,0 Gew.-% Al₂O₃ dotiertes Quarzglas erhalten.

Bei einigen der bekannten Dotierstoffe erfordert eine signifikante Verbesserung der Trockenätzbeständigkeit jedoch eine hohe Dotierstoff-Konzentration, was zu Ausfällungen, Phasentrennung und Kristallisation führen kann.

Um dies zu vermeiden, wird in der US 2005/0272588 A1 eine Co-Dotierung von Seltenerdmetall und Aluminiumoxid vorgeschlagen, wobei für die Gesamt-Dotierstoffkonzentration ein Bereich von 0,1 bis 20 Gew.-% angegeben wird. Zur Herstellung eines entsprechend dotierten Quarzglas-Rohlings wird SiO₂-Pulver mit pulverförmigen Oxiden der Dotierstoffe vermischt und das Gemisch in einem Quarzglasrohr unter Unterdruck gesintert.

In der US 2008/0066497 A1 ist ein Waferhalter aus einem mit 1,5 Gew.-% Al₂O₃ und Stickstoff dotierten Quarzglas für den Einsatz in Trockenätzprozessen beschrieben. Die Herstellung der Al₂O₃-Dotierung erfolgt in einem Verneuil-Verfahren durch Aufschmelzen eines Gemischs aus SiO₂-Pulver und Al₂O₃-Pulver.

### Technische Aufgabenstellung

Bei den bisher bekannten dotierten Quarzglas-Werkstoffen für Anwendungen in Prozessumgebungen der reaktiven Plasma-Trockenätztechnik erweist sich die Plasmaätzresistenz als wenig reproduzierbar.

Außerdem tritt bei Halbleiterfertigungsprozessen, wie etwa bei Sputter- oder Aufdampfprozessen, häufig das Problem auf, dass sich Materialschichten auf den Oberflächen innerhalb des Reaktors niederschlagen. Die Materialschichten können sich mit der Zeit ablösen und führen dann ebenfalls zu Partikelproblemen. Die Materialschichten haften an rauen Bauteil-Oberflächen besser, so dass der Oberflächenrauigkeit des jeweiligen Bauteils eine wichtige Rolle zukommt. Es ist aber schwierig, den Parameter "Oberflächenrauigkeit" richtig zu berücksichtigen, wenn sich dieser im Verlauf der Lebensdauer des Bauteils durch Ätzabtrag laufend verändert.

Der Erfindung liegt daher die Aufgabe zugrunde, ein Bauteil aus dotiertem Quarzglas anzugeben, das sich bei Einsatz in einem plasma-unterstützten Fertigungsprozess durch hohe Trockenätzbeständigkeit und geringe Partikelbildung und insbesondere durch einen gleichmäßigen Ätzabtrag auszeichnet.

Weiterhin geht es bei der Erfindung darum, ein Verfahren zur Herstellung eines derartigen Bauteils bereit zu stellen.

### Zusammenfassung der Erfindung

Hinsichtlich des Verfahrens wird diese Aufgabe ausgehend von einem Verfahren der eingangs genannten Gattung erfindungsgemäß dadurch gelöst, dass die SiO₂-Teilchen im Schlicker Aggregate oder Agglomerate von SiO₂-Primärpartiklen sind und eine mittlere Teilchengröße von weniger als 30 µm haben.

Diese SiO₂-Teilchen werden vorzugsweise pyrogen anhand eines Sootabscheideprozesses erzeugt. Dabei wird eine flüssige oder gasförmige Ausgangssubstanz einer chemischen Reaktion (Hydrolyse oder Pyrolyse) unterzogen und aus der Gasphase als festes SiO₂ auf einer Ablagerungsfläche abgeschieden. Die Reaktionszone ist beispielsweise eine Brennerflamme oder ein Lichtbogen (Plasma). Mittels derartiger Plasma- oder CVD-Abscheideverfahren, die beispielsweise unter den Bezeichnungen OVD-, VAD-, MCVD-, PCVD- oder FCVD-Verfahren bekannt sind, wird synthetisches Quarzglas im industriellen Maßstab hergestellt. Die Ausgangssubstanz ist beispielsweise Siliziumtetrachlorid (SiCl₄) oder eine chlorfreie Siliziumverbindung wie etwa ein Polyalkylsiloxan.

Die in der Reaktionszone gebildeten SiO₂-Primärpartikel sind sphärisch und haben Partikelgrößen, die im Mittel weniger 200 nm, typischerweise sogar weniger als 100 nm betragen. In der Reaktionszone lagern sich diese sphärischen Nanoteilchen zu Sekundärpartikeln in Form mehr oder weniger sphärischer Aggregate oder Agglomerate zusammen, die auf der Ablagerungsfläche als poröser "Ruß" (häufig auch als "Soot" bezeichnet) abgeschieden werden und dabei als so genannter "Sootkörper" oder "Sootstaub" anfallen. Je nach ihrem Entstehungsort innerhalb der Reaktionszone und ihrem Weg zur Ablagerungsfläche bestehen die Sekundärteilchen aus einer unterschiedlichen Anzahl von Primärpartikeln und zeigen daher grundsätzlich eine breite Teilchengrößenverteilung.

Der Sootabscheideprozess erzeugt eine isotrope SiO₂-Masseverteilung im "Sootkörper" oder "Sootstaub", was im Hinblick auf eine homogene Dotierstoffverteilung vorteilhaft ist.

Die so pyrogen erzeugten "Sekundärpartikel" werden im Folgenden als "SiO₂-Teilchen" bezeichnet. Es wird ein wässriger Schlicker erzeugt, der diese SiO₂-Teilchen mit einer mittleren Teilchengröße von weniger als 30 µm, bevorzugt von weniger als 20 µm und ganz besonders bevorzugt von weniger als 15 µm enthält.

Der Schlicker wird auf einen alkalischen pH-Wert eingestellt, beispielsweise auf einen pH-Wert oberhalb von 12, insbesondere auf einen pH-Wert von 14, und er wird homogenisiert.

Außerdem wird eine Dotierlösung erzeugt, die ein Lösungsmittel und mindestens einen Dotierstoff enthält. Der Dotierstoff beziehungsweise eine Dotierstoff-Vorläufersubstanz sind in dem Lösungsmittel löslich. Bei einem Dotierstoff in Form von Aluminium (Al) ist das Lösungsmittel beispielsweise Wasser und die lösliche Vorläufersubstanz für den Dotierstoff ist beispielsweise AlCl₃. Anstelle von Chloriden sind auch andere lösliche Verbindungen als Vorläufersubstanz einsetzbar, wie beispielsweise Nitrate oder organische Verbindungen.

Dem Schlicker wird die Dotierlösung zugeführt. Dies geschieht vorzugsweise, indem der Schlicker kontinuierlich bewegt, beispielsweise vibriert, gerüttelt oder gerührt wird, und indem die Dotierlösung langsam und in fein verteilter Form dem bewegten Schlicker zugeführt wird, beispielsweise in Form eines Sprühnebels, in dem die Dotierlösung in zerstäubter Form vorliegt. Der Sprühnebel wird beispielsweise erzeugt, indem die Dotierlösung unter Druck einer Zerstäuberdüse zugeführt und aus dieser in Form feiner Tröpfchen in Richtung auf die Schlicker-Oberfläche beschleunigt wird. Die feinen Tröpfchen haben beispielsweise Durchmesser zwischen 10 µm und 40 µm.

Aufgrund des hohen pH-Wertes des Schlickers kommt es unmittelbar zu einer Präzipitation des Hydroxids des Dotierstoffs, wie beispielsweise in Form von Al(OH)₃. Der Hydroxid-Feststoff adsorbiert an den Oberflächen der SiO₂-Teilchen im Schlicker und wird dadurch immobilisiert, so dass eine Koagulation, Seggregation oder Sedimentation von Hydroxidteilchen verhindert wird. Der mit dem Dotierstoff versetzte Schlicker wird weiter homogenisiert.

Der Dotierstoff beziehungsweise die Dotierstoff-Vorläufersubstanz lagert sich an den Oberflächen der SiO₂-Teilchen an, und - da die SiO₂-Teilchen nicht vollkommen dicht sind, es ist davon auszugehen, dass Dotierstoff auch in die SiO₂-Teilchen gelangt und sich dabei in den Hohlräumen zwischen den SiO₂-Primärpartikeln verteilt. Mit dieser Vorgehensweise ist gewährleistet, dass der Dotierstoff beziehungsweise die Dotierstoff-Vorläufersubstanz möglichst homogen im und am SiO₂-Feststoffanteil des Schlickers verteilt sind. Der Schlicker enthält daher vorzugsweise ausschließlich pyrogen erzeugte SiO₂-Teilchen.

Der mit dem Dotierstoff versetzte SiO₂-Schlicker wird anschließend auf übliche Weise getrocknet und zu porösen Granulatteilchen weiterverarbeitet, die SiO₂ und den mindestens einen Dotierstoff enthalten. Aus den Granulatteilchen wird das Bauteil aus dotiertem, transparentem Quarzglas gesintert oder geschmolzen.

Das Sintern der Granulatteilchen erfolgt vorzugsweise in einer Stickstoff enthaltenen Atmosphäre durch Gasdrucksintern. Beim Sintern wird ein vollständiges Aufschmelzen der Granulatteilchen vermieden, so dass keine oder wenig Flüssigphase entsteht und die durch die Anordnung der Granulatteilchen vorgegebene Fernordnung nach dem Sintern im Wesentlichen erhalten bleibt - abgesehen von den für das Sintern typischen Verdichtungen durch Partikel-Umordnungen und diffusionsgetriebenen Materialtransport. Da die Oberflächen der ursprünglichen SiO₂-Teilchen des Schlickers homogen mit dem Dotierstoff belegt sind und da sich diese Teilchen durch das Sintern nicht wesentlich verändern, ist die anfängliche Größe der SiO₂-Teilchen maßgeblich für die örtliche Verteilung des Dotierstoffs. Damit trägt die geringe anfängliche mittlere Teilchengröße der SiO₂-Teilchen im Zusammenspiel mit der Herstellungsweise für die Dotierung zu einer hohen Mikrohomogenität der Dotierstoffverteilung und damit zu einer hohen Trockenätzbeständigkeit, einer geringen Partikelbildung und einem gleichmäßigen Ätzabtrag bei.

Hinsichtlich des Bauteils wird die oben angegebene technische Aufgabe ausgehend von einem Bauteil der eingangs genannten Gattung erfindungsgemäß dadurch gelöst, dass das dotierte Quarzglas eine Mikrohomogenität aufweist, die definiert ist (a) durch eine Oberflächenrauigkeit mit einem Rₐ-Wert von weniger als 20 nm, nachdem die Oberfläche einer in der Beschreibung spezifizierten Trockenätzprozedur unterzogen worden ist, und/oder (b) durch eine Dotierstoff-Verteilung mit einem lateralen Konzentrationsprofil, bei dem Maxima der Dotierstoff-Konzentration einen mittleren Abstand von weniger als 30 µm voneinander haben.

Das erfindungsgemäße Quarzglas-Bauteil besteht aus Quarzglas mit einem Dotierstoff oder mit mehreren Dotierstoffen und es zeichnet sich durch eine vergleichsweise homogene Dotierstoffverteilung im Mikromaßstab aus. Als Maß für die homogene Dotierstoffverteilung dient die Oberflächenrauigkeit, die das dotierte Quarzglas nach einer standardisierten Trockenätzprozedur aufweist und/oder der mittlere Abstand von Maxima der Dotierstoff-Konzentration untereinander.

Überraschenderweise hat sich gezeigt, dass eine homogene Dotierstoffverteilung im Mikromaßstab die Trockenätzbeständigkeit des Bauteils erhöht als auch die Rauigkeit der Oberfläche nach der Trockenätzbehandlung verringert.

Die Rauigkeit der anhand der standardisierten Trockenätzprozedur behandelten Oberfläche zeichnet sich durch eine geringe Rautiefe aus, mit einem Rₐ-Wert von weniger als 20 nm, idealerweise einem Rₐ-Wert von weniger als 15 nm.

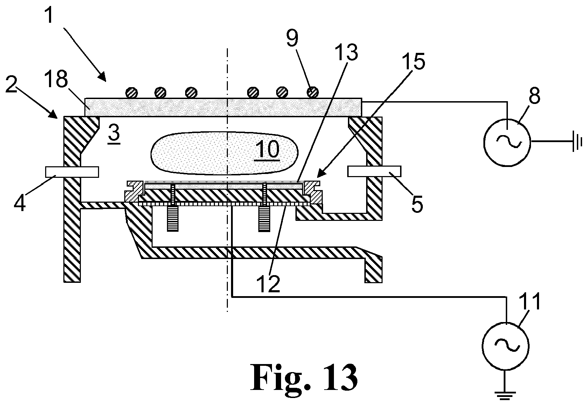

**Figur 13** zeigt schematisch einen Plasmareaktor 1 für die Durchführung einer Trockenätzbehandlung einer Messprobe 13. Der Reaktor 1 weist eine Wandung 2 auf, die eine Plasmareaktorkammer 3 umschließt. Die Wandung 2 ist mit einem Gaseinlass 4 versehen, der mit einer (nicht dargestellten) Gasquelle verbunden ist, aus welcher der Reaktorkammer 3 Gase zugeführt werden können. Über einen Gasauslass 5, der mit einer (nicht dargestellten) Hochvakuumpumpe verbunden ist, wird der KammerInnenraum 3 abgepumpt, um einen für die Trockenätzbehandlung geeigneten niedrigen Kammerdruck zwischen 0,5 und 10 Pa einzustellen. Eine HF-Energiequelle 8 für 13,56 MHz, die mit einer oberen Elektrode 9 verbunden ist, koppelt induktiv Energie in ein innerhalb der Reaktorkammer 3 gezündetes Plasma 10 ein. Eine weitere HF-Energiequelle 11 für 13,56 MHz ist mit einer unteren Elektrode 12 verbunden, die unterhalb der zu bearbeitenden Messprobe 13 positioniert ist und mittels der an der Messprobe 13 eine unabhängige elektrische Vorspannung (bias voltage) angelegt werden kann. Die Messprobe 13 ist auf einer Halteeinrichtung fixiert, der insgesamt die Bezugsziffer 15 zugeordnet ist. Der obere Abschluss der Reaktorwandung 2 wird von einem dielektrischen Fenster 18 gebildet.

Zur Ermittlung der Mikrohomogenität wird die Messprobe einer Standard-Trockenätzprozedur mit folgenden Behandlungsschritten unterzogen:
(a) Eine Planseite einer im Querschnitt runden Quarzglasscheibe mit einem Durchmesser von 28 mm und mit einer Dicke von 1 mm poliert, so dass sie eine Oberflächenrauigkeit mit einem Rₐ-Wert von 4 nm oder weniger aufweist.
(b) Die Quarzglasscheibe wird in den Plasmareaktor 1 eingebracht und die polierte Planseite einer Trockenätzprozedur ausgesetzt, die durch folgende Parameter charakterisiert ist:
   - In die HF-Energiequelle 8 wird eine Leistung von 600 Watt eingespeist.
   - Mittels der HF-Energiequelle 11 wird bei einer Eingangsleistung von 10 Watt an der Messprobe eine Vorspannung von minus 100 Volt angelegt
   - Durch den Gaseinlass 4 werden folgende Prozessgase in die Reaktorkammer 3 eingeleitet: 5 sccm Argon, 1 sccm CF₄, 0,3 sccm O₂.
   - Der Kammerdruck ist auf 6 Pa eingestellt.
   - Die Ätzdauer beträgt 60 Minuten.

Es hat sich gezeigt, dass sich nach dieser Trockenätzprozedur eine Oberflächenrauigkeit einstellt, die ein Maß für die Homogenität der Dotierstoffverteilung in der Probe ist. Die kann darauf zurückgeführt werden, dass dotierstoffreiche Quarzglasbereiche ein anderes Trockenätzverhalten zeigen als dotierstoffarme Quarzglasbereiche. Grundsätzlich sollten die dotierstoffreichen Quarzglasbereiche eine vergleichsweise geringe Ätzrate aufweisen. Während der Ätzdauer von 60 Minuten machen sich auch geringe Unterschiede in den Ätzraten bemerkbar und bewirken die Aufrauhung der geätzten Oberfläche. Beim erfindungsgemäßen Bauteil sind die Ätzraten-Unterschiede aber so gering, dass sich eine mittlere Oberflächenrauigkeit (Rₐ-Wert) von weniger als 20 nm, vorzugsweise weniger als 15 nm einstellt. Diese geringe Oberflächenrauigkeit weist somit auf eine hohe Homogenität der Dotierstoffverteilung ein.

Die hohe Homogenität der Dotierstoffverteilung zeigt sich auch darin, dass bei einer Messung des Konzentrationsprofils des mindestens einen Dotierstoffs in lateraler Richtung Maxima der Dotierstoff-Konzentration ermittelt werden, die einen geringen Abstand voneinander haben. Vorzugsweise weist das dotierte Quarzglas daher eine Mikrohomogenität auf, die durch eine Dotierstoff-Verteilung mit einem lateralen Konzentrationsprofil definiert ist, bei dem Maxima der Dotierstoff-Konzentration einen mittleren Abstand von weniger als 30 µm, vorzugsweise einen Abstand von weniger als 20 µm und besonders bevorzugt weniger als 15 µm haben.

Das laterale Konzentrationsprofil des mindestens einen Dotierstoffs wird mittels räumlich aufgelöster Analyse ermittelt; beispielsweise mittels energiedispersiver Röntgenspektroskopie (EDX). Der Abstand ergibt sich als Mittenabstand benachbarter Konzentrationsmaxima; der mittlere Abstand ist der arithmetische Mittelwert mehrerer Messungen.

Anhand der Figuren 15a bis 15c wird die Bestimmung des lateralen Dotierstoff-Konzentrationsprofils erläutert. Die Skizze von **Figur 15a** zeigt schematisch zwei nebeneinander liegende SiO₂-Teilchen 41a, 41b, deren Oberflächen jeweils mit einer Schicht 42 aus einem Dotierstoff beschichtet sind. Die SiO₂-Teilchen haben etwa gleiche Teilchengröße wie durch den Pfeil "D" angezeigt.

Die Skizze von **Figur 15b** zeigt die beiden infolge eines Sintervorgangs miteinander verbundenen SiO₂-Teilchen 41a, 41b und den aus der Dotierstoff-Schicht 42 durch Sintern hervorgegangenen, dotierstoffreichen Glasbereich 43, der die SiO₂-Teilchen 41a, 41b umgibt und sich auch zwischen ihnen erstreckt. Der Glasbereich 43 stellt keine eigene Phase dar, sondern er unterscheidet sich von dem Bereich der ehemaligen SiO₂-Teilchen 41a, 41b lediglich durch einen vergleichsweise höheren Anteil an Dotierstoff. Infolge von Diffusion während des Sinterprozesses hat sich der anfänglich an den Teilchen-Oberflächen konzentrierte Dotierstoff im gesamten Quarzglas verteilt, zeigt aber im Bereich der ehemaligen Oberflächen weiterhin ein Maximum der Konzentration.

Dies zeigt schematisch das Diagramm von **Figur 15c,** in dem die mittels räumlich aufgelöster Analyse ermittelte Dotierstoff-Konzentration "C" gegen die Ortskoordinate "x" aufgetragen ist, deren lateralen Verlauf der Richtungspfeil 44 anzeigt. Maxima 45 der Dotierstoff-Konzentration werden an den Glasbereichen 43 ermittelt. Die Mittenabstände A1 und A2 der Maxima 45 sind maximal so groß wie die anfängliche mittlere Teilchengröße D der SiO₂-Teilchen 41a, 41b (also beispielsweise kleiner als 30 µm bei SiO₂-Teilchen mit einer mittleren Teilchengröße von weniger als 30 µm). Dies wird hier als Maß für eine hohe Mikrohomogenität der Dotierstoffverteilung angesehen, die zu einer hohen Trockenätzbeständigkeit, geringen Partikelbildung und einem gleichmäßigen Ätzabtrag beiträgt.

Das erfindungsgemäße Bauteil ist mittels des oben beschriebenen Verfahrens der Erfindung herstellbar.

Im Hinblick auf eine hohe Homogenität der Dotierstoffverteilung hat es sich als vorteilhaft erwiesen, wenn der Dotierstoff oder die Dotierstoffe in einer Dotierstoff-Gesamtkonzentration im Bereich von 0,1 Gew.- % bis 5 Gew.-%, vorzugsweise in einer Dotierstoff-Gesamtkonzentration im Bereich von 0,5 bis 3 Gew.-% vorliegen.

Bei Dotierstoff-Gesamtkonzentrationen von weniger als 0,1 Gew.- % lässt die Wirkung auf die Verbesserung der Trockenätzbeständigkeit ab, und bei Dotierstoff-Gesamtkonzentrationen von mehr als 5 Gew.- % erweist es sich als zunehmend schwierig, unerwünschte Blasenbildung zu unterdrücken.

Das dotierte Quarzglas enthält vorzugsweise mindestens eine Dotierstoff-Verbindung mit einem Dotierstoff, der aus der Gruppe ausgewählt ist, bestehend aus: Al, Sm, Eu, Yb, Pm, Pr, Nd, Ce, Tb, Gd, Ba, Mg, Y, Tm, Dy, Ho, Er, Cd, Co, Cr, Cs, Zr, In, Cu, Fe, Bi, Ga und Ti. Diese Metalle, die im Quarzglas in der Regel als oxidische Verbindung vorliegen, sind geeignet, mit Fluor unter Bildung einer Fluorid-Verbindung zu reagieren, wobei die Fluorid-Verbindung einen Siedepunkt hat, der höher ist als derjenige von SiF₄.

Als besonders geeignet im Hinblick auf eine hohe Trockenätzbeständigkeit hat sich eine Ausführungsform des Quarzglas-Bauteils erwiesen, bei der Aluminium der Dotierstoff ist und Al₂O₃ die Dotierstoff-Verbindung, wobei in dem Fall die Dotierstoff-Gesamtkonzentration vorzugsweise im Bereich von 0,5 bis 3 Gew.-% liegt.

Verunreinigungen im Quarzglas können die Trockenätzbeständigkeit beeinträchtigen. Daher ist mindestens das SiO₂-Anteil des dotierten Quarzglases aus synthetisch erzeugten SiO₂-Rohstoffen erzeugt. Synthetisch hergestellte SiO₂-Rohstoffe zeichnen sich durch eine hohe Reinheit aus.

### Definitionen und Messmethoden

Einzelne Begriffe der obigen Beschreibung werden im Folgenden ergänzend definiert. Die Definitionen sind Bestandteil der Beschreibung der Erfindung. Bei einem Widerspruch zwischen einer der folgenden Definitionen und der übrigen Beschreibung ist das in der Beschreibung Gesagte maßgeblich.

### Quarzglas

Unter Quarzglas wird hier hochkieselsäurehaltiges Glas mit einem SiO₂-Anteil von mindestens 90 mol.-% verstanden.

### Dotierung

Die Dotierung besteht aus einem Dotierstoff oder aus mehreren Dotierstoffen. Der "Dotierstoff" ist eine Substanz, die dem Glas zur Erzielung gewünschter Eigenschaften absichtlich hinzugefügt wird.

Der Dotierstoff (beispielsweise Ytterbium; Yb) liegt in Quarzglas in der Regel nicht in elementarer Form sondern als Verbindung vor, beispielsweise als oxidische Verbindung. Gegebenenfalls basieren Konzentrationsangaben zu dem Dotierstoff auf SiO₂ und der molaren Konzentration des Dotierstoffs in Form der jeweiligen Verbindung in ihrer höchsten Oxidationsstufe (beispielsweise Yb₂O₃). Die Ermittlung der Einsatzmenge einer Ausgangssubstanz für den Dotierstoff in einer nicht-oxidischen Form (beispielsweise YbCl₃) berücksichtigt das Verhältnis der jeweiligen Molgewichte der Ausgangssubstanz in der nicht-oxidischen Form und des finalen Dotierstoffs in seiner oxidischen Form.

### Schlicker - Dispersion

Der Begriff "Schlicker" wird für eine Dispersion verwendet, die SiO₂-Feststoffteilchen in einer Flüssigkeit enthält. Als Flüssigkeit kann Wasser eingesetzt werden, das durch Destillation oder Deionisierung gereinigt ist, um den Gehalt an Verunreinigungen zu minimieren.

### Teilchengröße und Teilchengrößenverteilung

Teilchengröße und Teilchengrößenverteilung der SiO₂-Teilchen werden anhand der D₅₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Die Teilchengrößenverteilungen werden häufig anhand der jeweiligen D₁₀-, D₅₀- und D₉₀-Werte charakterisiert. Dabei kennzeichnet der D₁₀-Wert diejenige Teilchengröße, die von 10% des kumulativen Volumens der SiO₂-Teilchen nicht erreicht wird, und dementsprechend der D₅₀-Wert und der D₉₀-Wert diejenige Partikelgrößen, die von 50% beziehungsweise von 90% des kumulativen Volumens der SiO₂-Partikel nicht erreicht wird. Die Partikelgrößenverteilung wird durch Streulicht- und Laserbeugungsspektroskopie nach ISO 13320 ermittelt.

### Granulat

Man kann zwischen Aufbaugranulation und Pressgranulation und verfahrenstechnisch zwischen Nass- und Trocken-Granulierverfahren unterscheiden. Bekannte Methoden sind Rollgranulation in einem Granulierteller, Sprühgranulation, Frostgranuation, Zentrifugalzerstäubung, Wirbelschichtgranulation, Granulierverfahren unter Einsatz einer Granuliermühle, Kompaktierung, Walzenpressen, Brikettierung, Schülpenherstellung oder Extrudierung.

Beim Granulieren bilden sich durch Zusammenlagerungen der SiO₂-Primärteilchen diskrete, größere Agglomerate, die hier als "SiO₂-Granulatteilchen" oder kurz "Granulatteilchen" bezeichnet werden. In ihrer Gesamtheit bilden die Granulatteilchen ein "SiO₂-Granulat".

### Reinigen von Granulat

Durch eine thermochemische "Reinigung" der Granulatteilchen wird der Gehalt an Verunreinigungen verringert. Die Hauptverunreinigungen sind OH-Gruppen, kohlenstoffhaltige Verbindungen, Übergangsmetalle, Alkalimetalle und Erdalkalimetalle, die aus dem Einsatzmaterial stammen oder durch die Prozessierung eingetragen werden. Das Reinigen umfasst eine Behandlung bei hoher Temperatur (> 800°C) unter chlorhaltiger, fluorhaltiger und/oder sauerstoffhaltiger Atmosphäre.

### Sintern / Schmelzen

Mit "Sintern" wird hier eine Behandlung bei erhöhter Temperatur von mehr als 1100 °C bezeichnet, die unter Beibehaltung einer gewissen Fernordnung ein Verglasen der Granulatteilchen und die Bildung des Bauteils aus dem dotierten, transparenten Quarzglas bewirkt, ohne dass dabei die Granulatteilchen vollständig aufgeschmolzen werden (Aufhebung der Fernordnung).

Beim "Schmelzen" werden die Granulatteilchen auf sehr hohe Temperatur oberhalb von 1800 °C unter Bildung einer viskosen Quarzglasmasse erhitzt.

### Oberflächenrauigkeit

Die Oberflächenrauigkeit wird mittels eines Profilmessgerätes (VEECO Dektak 8) vermessen. Aus den Messwerten wird die mittlere Rautiefe Rₐ gemäß der DIN 4768 (2010) bestimmt.

### Messung der Mikrohomogenität

Die Mikrohomogenität - definiert als Homogenität der Dotierstoffverteilung in Mikrometerbereich - wird indirekt anhand der Oberflächenrauigkeit nach Durchführung einer Standard-Trockenätzprozedur ermittelt. Alternativ oder ergänzend dazu wird das Dotierstoff-Konzentrationsprofil mittels energiedispersiver Röntgenspektroskopie (EDX)bestimmt.

### Messung der Stampfdichte

Der Begriff "Stampfdichte" (engl.: tapped density) bezeichnet diejenige Dichte, die nach mechanischer Verdichtung des Pulvers oder des Granulats beispielsweise mittels Vibration des Behälters erzeugt wird. Sie wird nach DIN/ISO 787 Teil 11 ermittelt.

### Ausführunqsbeispiel

Nachfolgend wird die Erfindung anhand eines Ausführungsbeispiels und einer Zeichnung näher erläutert. Im Einzelnen zeigt
- **Figur 1**: ein Ätzprofil bei einer Probe aus einem mit Al₂O₃-dotierten Quarzglas gemäß der Erfindung nach Durchführung eines Standard-Trockenätzprogramms in einem Plasma-Ätzreaktor,
- **Figur 2**: ein Ätzprofil bei einer Referenzprobe aus reinem, undotiertem Quarzglas (Referenzprobe) nach Durchführung des Standard-Trockenätzprogramms,
- **Figur 3**: ein Diagramm zur Abhängigkeit der Erosionsrate von der Beschleunigungsspannung des Plasma-Ätzreaktors,
- **Figur 4**: ein Diagramm zur Abhängigkeit der Erosionsrate von der Al₂O₃-Konzentration des Quarzglases,
- **Figur 5**: ein Diagramm zur Abhängigkeit der Erosionsrate von der CF₄-Konzentration im Ätzgas des Plasma-Ätzreaktors,
- **Figur 6**: ein Diagramm zur Abhängigkeit der relativen Erosionsrate vom Innendruck in der Ätzkammer des Plasma-Ätzreaktors für verschiedene Proben,
- **Figur 7**: ein Diagramm zur chemischen Belegung der Oberfläche geätzter Proben in Abhängigkeit von der Ätzdauer,
- **Figur 8**: ein Ätzprofil bei einer Vergleichsprobe aus einem mit Al₂O₃-dotierten Quarzglas nach Durchführung des Standard-Trockenätzprogramms,
- **Figur 9**: eine rasterelektronenmikroskopische Aufnahme einer Probenoberfläche aus reinem, undotiertem Quarzglas (Referenzprobe) nach Durchführung des Standard-Trockenätzprogramms im Plasma-Ätzreaktor,
- **Figur 10**: eine rasterelektronenmikroskopische Aufnahme einer Probenoberfläche aus Al₂O₃-dotiertem Quarzglas gemäß der Erfindung nach Durchführung des Standard-Trockenätzprogramms im Plasma-Ätzreaktor,
- **Figur 11**: eine rasterelektronenmikroskopische Aufnahme der Oberfläche bei einer Vergleichsrobe aus einem mit Al₂O₃-dotierten Quarzglas nach Durchführung des Standard-Trockenätzprogramms,
- **Figur 12**: die Oberfläche der Vergleichsprobe von Figur 11 in stärkerer Vergrößerung,
- **Figur 13**: eine Ausführungsform eines Reaktors zur Durchführung eines plasmaunterstützten Fertigungsprozesses und insbesondere zur Durchführung von Trockenätzprozeduren in schematischer Darstellung, und

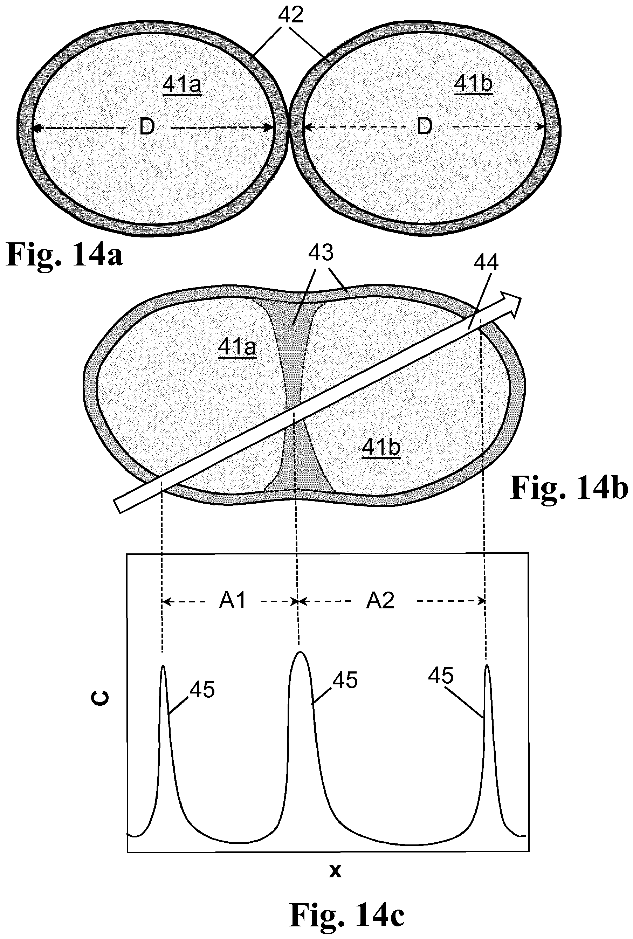

- **Figur 14**: eine Skizze zur Erläuterung der Methode zur Bestimmung eines lateralen Dotierstoff-Konzentrationsprofils.

### Herstellung eines Bauteils aus dotiertem Quarzglas

In einem üblichen Sootabscheideprozess werden unter Einsatz von Octamethylcyclotetrasiloxan (OMCTS) als Ausgangssubstanz SiO₂-Primärpartikel mit mittleren Partikelgrößen von weniger als 100 nm synthetisiert, die sich in einer Reaktionszone zu Sekundärpartikeln in Form mehr oder weniger sphärischer Aggregate oder Agglomerate zusammen. Diese Sekundärpartikel, die sich aus einer unterschiedlichen Anzahl von Primärpartikeln zusammensetzen und eine mittlere Teilchengröße (D₅₀-Wert) von etwa weniger als 10 µm haben, werden im Folgenden auch als "SiO₂-Teilchen" bezeichnet. Tabelle 1 nennt typische Eigenschaften der SiO₂-Teilchen.

**Tabelle 1**

| | |
|---|---|
| Stampfdichte | 0,03-0,05 m²/g |
| Restfeuchte | 0,02 - 1,0 % |
| Primärpartikelgröße | 94 nm |
| D₁₀ | 3,9 +/-0,38 µm |
| D₅₀ | 9,4 +/- 0,67 µm |
| D₉₀ | 25,6 +/-10,4 µm |

Es wird ein Schlicker aus diesen diskreten, synthetisch erzeugten SiO₂-Teilchen mit einer mittleren Teilchengröße (D₅₀-Wert) um 10 µm in Reinstwasser hergestellt.

Durch Zugabe einer konzentrierten Ammoniaklösung wird ein pH-Wert von 14 eingestellt. Die alkalische Suspension wird homogenisiert und gefiltert.

Außerdem wird eine wässrige Dotierlösung aus AlCl₃ in Reinstwasser erzeugt, homogenisiert und ebenfalls gefiltert.

Dem durch Rühren bewegten Schlicker wird die Dotierlösung in Form eines Sprühnebels zugeführt. Zur Erzeugung des Sprühnebels wird die Dotierlösung mittels einer Sprühdüse zerstäubt, wobei ein Arbeitsdruck von 2 bar und eine Durchflussrate von 0,8 l/h eingestellt wird. Der so erzeugte Sprühnebel enthält Tropfen mit einem mittleren Durchmesser zwischen 10 µm und 40 µm. Aufgrund des hohen pH-Wertes des Schlickers kommt es unmittelbar zu einer Ausfällung des Dotierstoffs in Form von Al(OH)₃. Die Feststoffteilchen adsorbieren an den vorhandenen Oberflächen der SiO₂-Teilchen und werden dadurch immobilisiert, so dass eine Koagulation der Feststoffteilchen oder eine Sedimentation verhindert wird. Anschließend wird der mit dem Dotierstoff versetzte Schlicker weitere 2 Stunden lang durch Rühren homogenisiert. Mit dieser Vorgehensweise ist gewährleistet, dass ein optimal homogen dotierter SiO₂-Schlicker erhalten wird.

Der dotierte SiO₂-Schlicker wird eingefroren und durch Frostgranulation zu einem Granulat weiterverarbeitet. Dabei wird der nach dem Auftauen erhaltene Granulatschlamm mehrmals mit Reinstwasser gewaschen und das überschüssige Wasser jeweils abdekantiert.

Anschließend wird der von Ammoniak befreite und gereinigte Granulatschlamm bei einer Temperatur um 400 °C getrocknet. Das getrocknete Granulat hat typischerweise Korngrößen im Bereich von 300 µm bis 600 µm. Es wird in eine Kunststoffform eingeschweißt und bei 400 bar isostatisch zu einem Granulat-Pressling gepresst.

Der Granulat-Pressling wird in einer chlorhaltigen Atmosphäre bei etwa 900°C für etwa 8 Stunden behandelt. Dadurch werden Verunreinigungen aus dem Pressling entfernt und der Hydroxylgruppengehalt wird auf etwa 3 Gew.-ppm reduziert.

Der gereinigte Granulat-Pressling hat Zylinderform mit einem Durchmesser von 30 mm und einer Länge von 100 mm. Seine mittlere Dichte beträgt etwa 45% der Dichte des dotierten Quarzglases. Er wird durch Erhitzen im Vakuumofen auf eine Temperatur von 1550°C vorgesintert und anschließend durch Gasdrucksintern unter Argon zu einem Zylinder aus Al₂O₃-dotierten, transparenten Quarzglas gesintert. Der Gasdrucksinterprozess wird in einem Gasdrucksinterofen mit einer evakuierbaren Sinterform aus Grafit durchgeführt. Der Innenraum der Sinterform ist zylinderförmig ausgebildet und von einem Boden und einer im Querschnitt ringförmigen Seitenwand begrenzt.

Auf diese Weise werden Glasproben mit mittleren Al₂O₃-Konzentrationen zwischen 1 und 2,7 Gew.-% hergestellt. Für die Durchführung von Messungen werden daraus Platten mit etwa 1 mm Dicke und seitlichen Abmessungen zwischen 13 mm x 13 mm und 28 mm x 28 mm geschnitten und poliert.

### Plasmaätzversuche

An Proben des Al₂O₃-dotierten Quarzglases und einer Probe aus handelsüblichem Quarzglas wurden Trockenätzversuche durchgeführt. Dafür wurde ein Trockenätzreaktor eingesetzt, wie er oben anhand Figur 13 erläutert worden ist

Die zu vermessenden Oberfläche der Proben wurden poliert, so dass sie eine anfängliche mittlere Rauigkeit (Rₐ-Wert) von etwa 3 nm aufweisen und bereichsweise mit Polyimidband maskiert. Anschließend wurden die Proben für eine Dauer von 0,5 Stunden bis 3 Stunden zusammen mit einer Referenzprobe aus handelsüblichem, nicht dotiertem Quarzglas hoher Homogenität ("Spectrosil 2000" von der Firma Heraeus Quarzglas GmbH & Co. KG) behandelt, um die erzeugte Ätzstufe (im Folgenden auch als "Erosionsstufe" bezeichnet) und die Oberflächenrauigkeit zu vermessen.

### Oberflächenprofile und Erosionsraten

Die relative Erosionsrate der aluminiumdotierten Proben im Vergleich zu der Referenzprobe variierte in Abhängigkeit von der Aluminiumoxidkonzentration der Probe, dem Kammerdruck, der induktiven Leistung, die mit dem Plasma gekoppelt ist, und der angelegten Vorspannung.

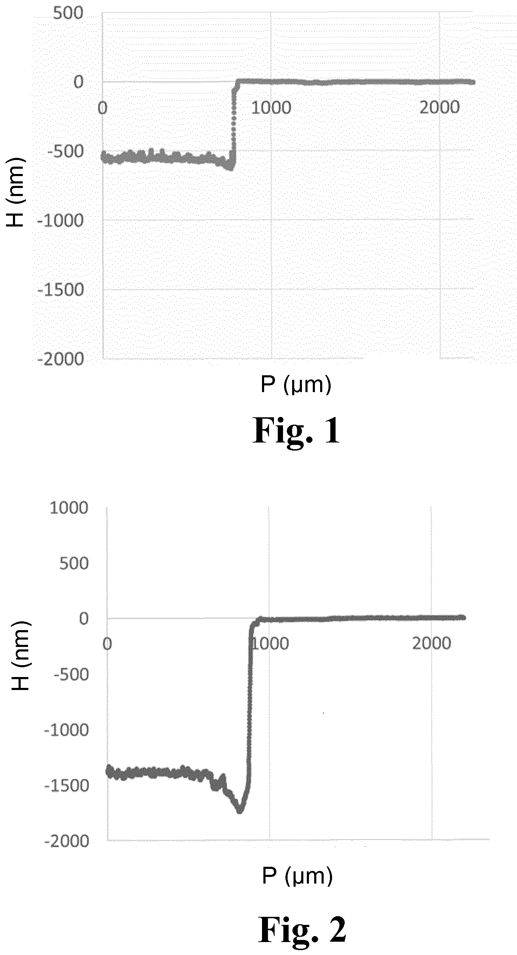

Das Diagramm von **Figur 2** zeigt das so ermittelte Oberflächen-Profil bei der Referenzprobe aus undotiertem Quarzglas nach Durchführung der oben erläuterten Standard-Trockenätzprozedur mit einer Gesamt-Ätzdauer von 1h. Die Ätztiefe H (in nm) ist gegen die Ortskoordinate P (in µm) aufgetragen. Auf der rechten Seite des Diagramms befindet sich der maskierte Oberflächenbereich der Probe; auf der linken Seite befindet sich der geätzte und aufgeraute Bereich der Probe. Demnach hat sich eine markante Erosionsstufe mit einer Höhe von etwa 1360 nm gebildet; der Rₐ-Wert der erodierten Oberfläche betrug etwa 15 nm.

Im Vergleich dazu zeigt **Figur 1** den Profilverlauf einer mit 2,7 Gew.-% Al₂O₃-dotierten Probe, die zusammen mit der Referenzprobe behandelt worden ist. Diese Probe zeigt eine Erosionstufe von etwa 560 nm und damit im Vergleich zur Referenzprobe eine um etwa 59% geringere Erosionsrate. Der Rₐ-Wert der erodierten Oberfläche betrug etwa 10 nm, war also sogar etwas niedriger als bei der Referenzprobe.

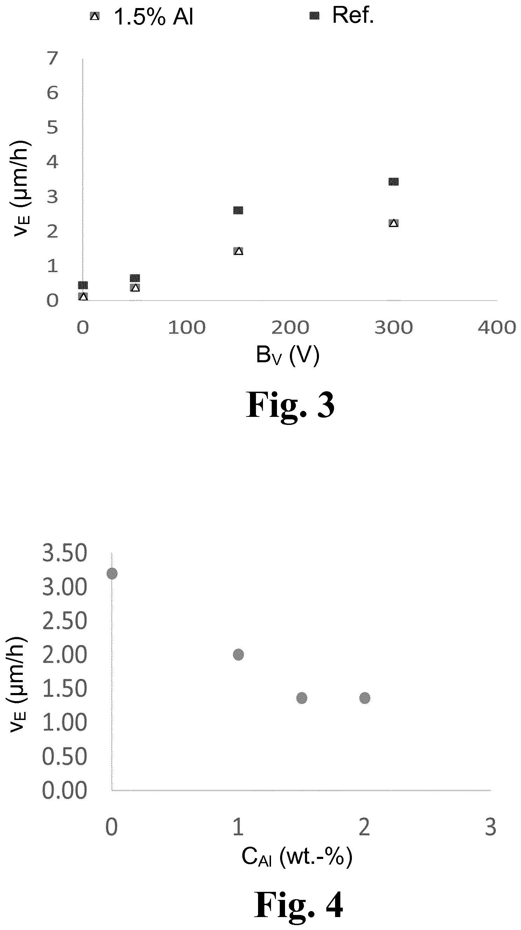

Das Diagramm von **Figur 3** zeigt ein Beispiel für die Vorspannungsabhängigkeit der Erosionsraten für eine Probe aus Quarzglas, das mit 1,5% Al₂O₃ dotiert ist, im Vergleich zur Referenzprobe. Hier ist die Erosionsrate v_{E} (in µm/h) gegen die Vorspannung Bv (bias voltage) in (V) aufgetragen. Es zeigte sich, dass über den gesamten Vorspannungsbereich zwischen 0 V und 300 V die Erosionsrate der aluminiumdotierten Probe wesentlich niedriger lag als bei der Referenzprobe. Bei höheren Vorspannungen nimmt jedoch die relative Differenz der Erosionsraten ab. Dies wird wie folgt interpretiert.

Während der Plasmabehandlung reagiert Fluor aus dem Fluorkohlenstoffplasma mit Aluminium im Al₂O₃-dotierten Quarzglas, was zu einer Oberflächenschicht auf dem Glas führt, die neben Siliziumdioxid auch Aluminiumfluorid enthält. Außerdem reagiert das Fluor mit dem Silizium im Glas und bildet Siliziumfluorid (SiF₄). Während SiF₄ bei Raumtemperatur gasförmig ist und daher sofort aus der Oberfläche entweicht, ist AlF₃ fest und bleibt auf der Oberfläche, wodurch es eine weitere Erosion verhindert und die Erosionsrate reduziert. Bei höheren Bias-Spannungen ist die Energie der Ionen (hauptsächlich Argon-Ionen), die auf die Glasoberfläche gelangen, höher und führt zu einer verstärkten Absputterung der Oberfläche, einschließlich der Absputterung des durch chemische Reaktion gebildeten AlF₃. So nähert sich bei höheren Bias-Spannungen die Erosionsrate der aluminiumdotierten Probe der von reinem Quarzglas an.

Das Diagramm in **Figur 4** zeigt die Abhängigkeit der Erosionsrate v_{E} (in µm/h) von der anfänglichen Al₂O₃-Konzentration C_{Al} (in Gew.-%). Es wurden die Erosionsraten die Referenzprobe (C_{Al} = 0) sowie für Proben mit eingewogenen Al₂O₃-Konzentration von 1; 1,5 und 2 Gew.- % ermittelt. Folgende Ätzparamater wurden angewandt:
Plasmagaszusammensetzung: 90 Vol.-% Argon und 10 Vol.-% CF₄,
Induktionsleistung: 600 W.
Vorspannung (DC bias): 100 V,
Kammerdruck: 2,8 Pa

Es zeigt sich, dass die Erosionsrate mit der Aluminiumoxid-Konzentration abnimmt und bei der Probe mit der höchsten Konzentration (C_{Al} = 2 Gew.-%) auf etwa 40% bezogen auf die Erosionsrate der Referenzprobe absinkt.

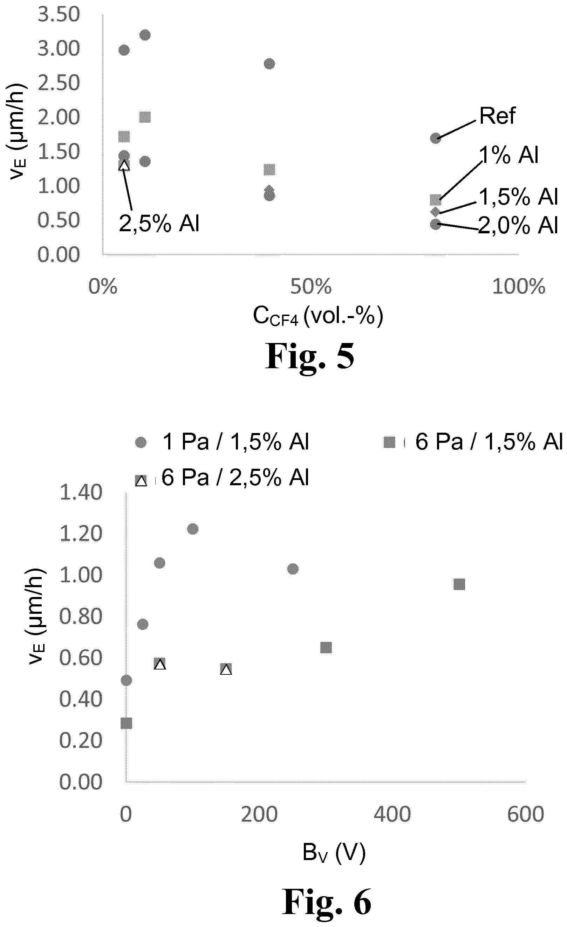

Das Diagramm von **Figur 5** zeigt die Abhängigkeit der Erosionsrate v_{E} (in µm/h) von der Plasmagaszusammensetzung, genauer gesagt vom Anteil an CF₄ im Plasmagas C_{CF4} (in Vol.-%; der Rest ist Argon) und von der Dotierstoff-Konzentration (für Al₂O-Konzentrationen von 0; 1,0; 1,5; 2,0 und 2,5 Gew.-%) bei folgenden Ätzparamatern:
Induktionsleistung: 600 W,
Vorspannung: 100 V DC,
Kammerdruck: 2,8 Pa.

Die höchste Erosionsrate ergibt sich bei einer Zusammensetzung des Plasmagases mit etwa 10 Vol.-% CF₄ und 90 Vol.-% Argon. Die relativen Erosionsraten der aluminiumdotierten Quarzgläser im Vergleich zur Referenzprobe waren bei dem im Versuch höchsten CF₄-Gehalt von 80 Vol.-% am kleinsten. Dies steht im Einklang mit der These, dass die Erosionsratenreduktion am signifikantesten ist, wenn das Plasma reich an Fluor ist, das für eine chemische Reaktion mit dem Aluminium im Glas verfügbar ist, um eine Maskierung aus dichtem AlF₃ zu bilden, und dass die Reduktion der Erosionsrate weniger ausgeprägt ist, wenn das Plasma reich an Argon ist, was die Sputterrate des AlF₃ auf der Probenoberfläche erhöht.

**Figur 6** zeigt die Abhängigkeit der Erosionsrate v_{E} (in µm/h) vom Kammerdruck für Quarzglasproben, die mit 1,5 Gew.-% beziehungsweise mit 2,5 Gew.-% Al₂O₃ dotiert sind. Im Diagramm ist für verschiedene Kammerdrücke (1 Pa und 6 Pa) die Entwicklung der relativen Erosionsrate (in µm/h - bezogen auf die Erosionsrate der Referenzprobe) gegen die Vorspannung Bv (in V) aufgetragen. Bei ausreichend niedrigen Drücken und hohen Vorspannungen zeigt sich kein wesentlicher Unterschied in den Erosionsraten zwischen den aluminiumdotierten Gläsern und der Referenzprobe. Bei einem niedrigen Kammerdruck von 1 Pa zeigt die Probe mit der eingewogenen Al₂O₃-Konzentration von 1,5 Gew.-% einen Effekt einer reduzierten Erosionsrate nur bei Vorspannungen von weniger als etwa 50 V. Bei einem hohen Kammerdruck von 6 Pa zeigen die beiden Proben mit den eingewogenen Al₂O₃-Konzentrationen von 1,5 Gew.-% und von 2,5 Gew.-% jedoch eine geringere relative Erosionsrate bis zu Vorspannungen von etwa 400 V. Somit hängt die Wirkung der Dotierung auf die Ätzrate sowohl von der Vorspannung als auch vom Kammerdruck ab. Bei niedrigeren Kammerdrücken wird angenommen, dass der Ionenfluss zur Probenoberfläche höher ist, was zu einer stärkeren Absputterung der Maskierung aus Aluminiumfluorid führen würde. Somit wäre bei niedrigeren Kammerdrücken der Maskierungseffekt, der zu einer reduzierten Erosionsrate führt, weniger ausgeprägt als bei hohen Kammerdrücken.

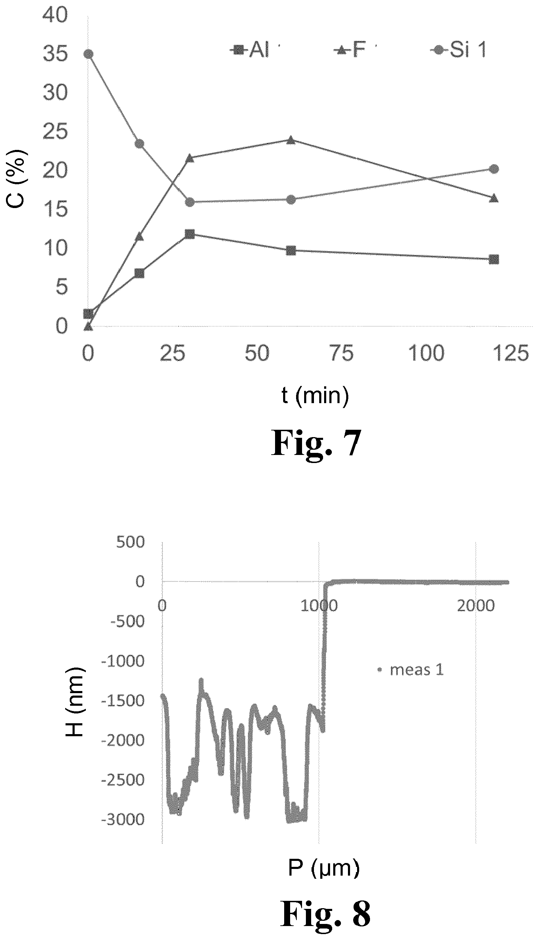

Zur Stützung der These, dass die Reduzierung der Erosionsrate der aluminiumdotierten Proben auf eine Anreicherung der erodierten Oberfläche in AlF₃ zurückzuführen ist, wurden Röntgen-photoelektronenspektroskopische Messungen an den erodierten Oberflächen durchgeführt. Ein Ergebnis dazu zeigt das Diagramm von **Figur 7****,** aus dem für eine Messprobe mit einem eingewogenen Al₂O₃-Gehalt von 1,6 Gew.-% die Entwicklung der relativen molare Konzentrationen C (mol.-%.) von Aluminium, Fluor und Silizium mit der Ätzdauer t (in min) ersichtlich sind. Die Messungen beginnen erst nach einem vorherigen 10-minütigen Absputtern der Oberfläche, um Verunreinigungen (z.B. durch Kohlenstoff) zu entfernen. Die Proben wurden 15 Minuten, 30 Minuten, 60 Minuten und 120 Minuten lang mit dem Plasmagas behandelt. Für jede Messdauer wurde eine separate Probe erzeugt. Es zeigt sich, dass die Oberfläche im Verlauf der Plasmabehandlung mit Aluminium und Fluorid angereichert wird und nach etwa 30 Minuten eine annähernd konstante Konzentration erreicht wird. Die anfängliche Aluminium(oxid)konzentration von ca. 1,6 mol-% wird durch die Plasmabehandlung auf etwa 10 mol-% erhöht, und die Fluoridkonzentration steigt auf etwa 20 mol-%. Das Verhältnis von Al:F von 1:2 entspricht nicht ganz dem molaren Verhältnis von 1:3, das von einer reinen AlF₃-Spezies erwartet würde, zeigt aber, dass eine chemische Reaktion zwischen Al und F und eine Anreicherung dieser beiden Spezies auf der Oberfläche stattfindet. Gleichzeitig wird die relative molare Konzentration an Silizium verringert, was durch die Anreicherung mit Al und F und durch die chemische Reaktion von Fluor mit Silizium zu erklären ist, durch die flüchtiges SiF₄ entsteht.

Es hat sich gezeigt, dass das nach dem erfindungsgemäßen Verfahren hergestellte Quarzglas nach der Plasma-Ätzbehandlung eine Oberfläche mit einer Rauigkeit hat, die signifikant geringer ist als die Oberflächenrauigkeit von aluminiumdotierten Proben, die nach dem Stand der Technik hergestellt worden sind. So wurde beispielsweise eine Probe, die mit etwa 0,9 Gew.-% Al₂O₃ dotiert ist nach dem Verfahren hergestellt, das in der eingangs genannten US 2008/0066497 A1 beschrieben ist (Aufschmelzen eines Pulvergemisches und Ablagerung aufgeschmolzener Glaspartikel auf einem Träger nach dem Verneuil-Verfahren). Die Behandlung dieses Quarzglases mit ähnlichen Plasmabedingungen wie bei den Proben, die anhand der Figuren 1 und 2 beschrieben sind, führte zu einer wesentlich raueren Oberfläche, wie das Erosionsprofil in **Figur 8** zeigt (Ätztiefe H (in nm) und Ortskoordinate P (in µm)). Der unmaskierte Teil der Probe (linke Seite) zeigt Täler mit einer Tiefe von mehr als 1000 nm und eine Oberflächenrauigkeit mit einem Rₐ-Wert von 160 nm. Dies ist ein Maß für die starke Veränderung der Oberfläche im Verlauf der Lebensdauer des Bauteils durch Ätzabtrag, was es erschwert, den Parameter "Oberflächenrauigkeit" im Hinblick auf Partikelerzeugung bei der Halbleiterherstellung richtig und reproduzierbar zu berücksichtigen.

In Tabelle 2 sind die Rₐ-Werte der geätzten Oberflächen zusammengefasst für das Referenz-Quarzglas wie anhand Figur 2 beschrieben, für das Beispiel gemäß der Erfindung wie anhand Figur 1 beschrieben und für das Vergleichsbeispiel wie anhand Figur 8 beschrieben.

**Tabelle 2**

| | Referenz (Fig. 2) | Beispiel (Fig. 1) | Vergleichsbeispiel (Fig. 8) |
|---|---|---|---|
| Rautiefe Rₐ (nm) | 15 | 10 | 260 |
| Relative Veränderung der Rautiefe Rₐ bezogen auf Referenz-Rₐ | 1 | 0,7 | 17 |

Nach der Trockenätzbehandlung zeigt die Oberfläche bei Vergleichsbeispiel eine um den Faktor 17 höhere mittlere Rautiefe Rₐ als die Oberfläche des undotierten aber sehr homogenen Referenz-Quarzglases. Im Vergleich dazu zeigt die Oberfläche des erfindungsgemäßen, dotierten Quarzglases nach der Trockenätzbehandlung eine um den Faktor 0,7 geringere mittlere Rautiefe Rₐ als beim Referenz-Quarzglas.

Eine Vielzahl von Ätzversuchen zeigen, dass unabhängig von den spezifischen Parametern der Trockenätzbehandlung bei gleichzeitig behandelten Messproben das Verhältnis der mittleren Rautiefen von erfindungsgemäßem dotiertem Quarzglas und Referenz-Quarzglas typischerweise und bevorzugt im Bereich von 0,5 und 3 und besonders bevorzugt im Bereich von 0,7 bis 2 liegt.

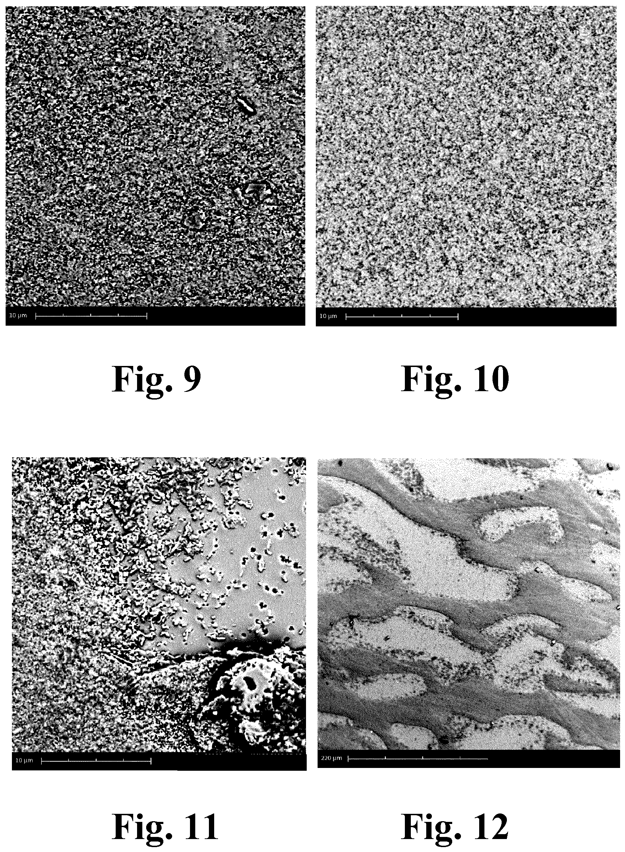

**Figur 9** zeigt eine REM-Aufnahme der Oberfläche der Referenzprobe nach einer Standard-Trockenätzprozedur in einer 10.000-fachen Vergrößerung. Der laterale Abstand zwischen Spitzen und Tälern des Rauheitsprofils beträgt etwa 1 µm.

**Figur 10** zeigt ebenfalls in 10.000-fache Vergrößerung die Oberfläche einer plasmabehandelten Messprobe aus Quarzglas gemäß der Erfindung, das mit 0,5 Gew.-% Al₂O₃ dotiert ist. Der laterale Abstand zwischen Spitzen und Tälern des Rauheitsprofils liegt im gleichen Bereich wie bei der Referenzprobe.

Die REM-Aufnahme von **Figur 11** zeigt ebenfalls in 10.000-fache Vergrößerung die Oberfläche einer anhand der Standard-Trockenätzprozedur plasmabehandelten Vergleichsprobe aus Quarzglas, das mit 0,9 Gew.-% Al₂O₃ dotiert ist und das anhand des Verneuil-Verfahrens wie in der US 2008/0066497 A1 erzeugt worden ist. Es ist erkennbar, dass Teilbereiche der Oberfläche den in den Figuren 9 und 10 gezeigten Oberflächen ähnlich sind, dass aber andere Teilbereiche eine unterschiedliche Struktur haben, was die größere Inhomogenität einer so hergestellten plasmabehandelten Probe unterstreicht.

**Figur 12** zeigt einer Aufnahme der Vergleichsprobe bei einer geringeren Vergrößerung von etwa 610-fach, woraus erkennbar ist, dass die lateralen Abstände zwischen Tälern und Spitzen des Oberflächenprofils im Mittel bei etwa 200 µm liegt.

Zusammenfassend zeigen diese Untersuchungen, dass ein dotiertes Quarzglas, hergestellt mit dem vorstehend beschriebenen Herstellungsverfahren unter Einsatz eines dotierten Schlickers aus pyrogen erzeugten SiO₂-Teilchen, zu einer mindestens zweifachen Reduzierung der Plasmaerosionsrate führt, wenn die Plasmabedingungen so sind, dass das physikalische Absputtern der Oberfläche minimiert wird. Insbesondere sollte die Vorspannung an der Probe nicht zu hoch sein, und ein Kammerdruck über etwa 2 Pa wirkt sich günstig aus.

## Patentansprüche

1. Bauteil aus dotiertem Quarzglas für den Einsatz in einem plasma-unterstützten Fertigungsprozess; insbesondere bei der Halbleiterfertigung, das mindestens einen Dotierstoff enthält, der geeignet ist, mit Fluor unter Bildung einer Fluorid-Verbindung zu reagieren, wobei die Fluorid-Verbindung einen Siedepunkt hat, der höher ist als derjenige von SiF4, **dadurch gekennzeichnet, dass** das dotierte Quarzglas eine Mikrohomogenität aufweist, die definiert ist (a) durch eine Oberflächenrauigkeit mit einem Rₐ-Wert von weniger als 20 nm, nachdem die Oberfläche einer in der Beschreibung spezifizierten Trockenätzprozedur unterzogen worden ist, und/oder (b) durch eine Dotierstoff-Verteilung mit einem lateralen Konzentrationsprofil, bei dem Maxima der Dotierstoff-Konzentration einen mittleren Abstand von weniger als 30 µm voneinander haben.

2. Bauteil nach Anspruch 1, **dadurch gekennzeichnet, dass** die Oberfläche einen Rₐ-Wert weniger als 15 nm aufweist und/oder die Maxima der Dotierstoff-Konzentration einen mittleren Abstand von weniger als 20 µm voneinander haben.

3. Bauteil nach Anspruch 1 oder 2, **dadurch gekennzeichnet, dass** der Dotierstoff oder die Dotierstoffe in einer Dotierstoff-Gesamtkonzentration im Bereich von 0,1 Gew.-% bis 5 Gew.-%, vorzugsweise in einer Dotierstoff-Gesamtkonzentration im Bereich von 0,5 bis 3 Gew.-% vorliegen.

4. Bauteil nach einem der vorhergehenden Ansprüche, **dadurch gekennzeichnet, dass** das dotierte Quarzglas mindestens eine Dotierstoff-Verbindung mit einem Dotierstoff enthält, der aus der Gruppe ausgewählt ist, bestehend aus: Al, Sm, Eu, Yb, Pm, Pr, Nd, Ce, Tb, Gd, Ba, Mg, Y, Tm, Dy, Ho, Er, Cd, Co, Cr, Cs, Zr, In, Cu, Fe, Bi, Ga und Ti.

5. Bauteil nach Anspruch 2 und Anspruch 4, **dadurch gekennzeichnet, dass** Aluminium der Dotierstoff ist und Al₂O₃ die Dotierstoff-Verbindung, und dass die Dotierstoff-Gesamtkonzentration im Bereich von 0,5 bis 3 Gew.-% liegt.

6. Bauteil nach einem der vorhergehenden Ansprüche, **dadurch gekennzeichnet, dass** das dotierte Quarzglas aus synthetisch erzeugten SiO₂-Rohstoffen hergestellt ist.

7. Verfahren zur Herstellung eines Bauteils aus dotiertem Quarzglas für den Einsatz in einem plasmaunterstützten Fertigungsprozess; insbesondere eines Bauteil nach einem der Ansprüche 1 bis 6, umfassend die folgenden Verfahrensschritte:
(a) Bereitstellen eines Schlickers, der SiO₂-Teilchen in einer wässrigen Flüssigkeit enthält,
(b) Bereitstellen einer Dotierlösung, die ein Lösungsmittel und mindestens einen Dotierstoff in gelöster Form enthält,
(c) Zusammenführen von Dotierlösung und Schlicker zu einer Dispersion, in der ein Feststoff ausgefällt wird, der den Dotierstoff enthält,
(d) Trocknen der Dispersion unter Bildung von Granulatteilchen, die SiO₂ und den Dotierstoff enthalten, und
(e) Sintern oder Schmelzen der Granulatteilchen unter Bildung des Bauteils aus dotiertem Quarzglas,
**dadurch gekennzeichnet, dass** die SiO₂-Teilchen im Schlicker Aggregate oder Agglomerate von SiO₂-Primärpartikeln sind und eine mittlere Teilchengröße von weniger als 30 µm haben.

8. Verfahren nach Anspruch 7, **dadurch gekennzeichnet, dass** zum Zusammenführen von Dotierlösung und Schlicker, die Dotierlösung zu einem Sprühnebel verdüst und dieser der Dispersion zugeführt wird.

9. Verfahren nach Anspruch 7 oder 8, **dadurch gekennzeichnet, dass** beim Zusammenführen von Dotierlösung und Schlicker, letzterer in Bewegung gehalten wird.

10. Verfahren nach einem der Ansprüche 7 bis 9, **dadurch gekennzeichnet, dass** vor dem Zusammenführen von Dotierlösung und Schlicker, letzterer auf einen pH-Wert von größer 12 eingestellt wird.

11. Verfahren nach einem der Ansprüche 7 bis 10, **dadurch gekennzeichnet, dass** die SiO₂-Primärpartikel pyrogen erzeugt sind und bevorzugt eine mittlere Partikelgrößen von weniger als 100 nm haben.

12. Verfahren nach einem der Ansprüche 7 bis 10, **dadurch gekennzeichnet, dass** das Sintern der Granulatteilchen in einer Stickstoff enthaltenden Atmosphäre durch Gasdrucksintern erfolgt.
